# EUROPEAN PATENT APPLICATION

(11) **EP 2 680 606 A1**
(43) Date of publication of application: **01.01.2014**
(21) Application number: 12250127.3
(22) Date of filing: 29.06.2012
(51) Int. Cl.: H04Q 11/00, H04J 14/02

(54) **Optical signal routing**

(71) Applicant: British Telecommunications Public Limited Company, London EC1A 7AJ (GB)
(72) Inventor: The designation of the inventor has not yet been filed
(74) Representative: Chan, Robin

(57) **Abstract**

An upgradable optical router for use in an optical switching network. In an initial configuration, the optical router contains wavelength selective switches configured to switch optical signals having WDM wavelengths positioned in a grid having exactly 100 GHz (about 0.8 nm) spacing in optical frequency, aka fixed grid. The interface ports within the optical switch contain an optical splitter and optical coupler and additionally space for a second selective switch. At a later point in time, a second wavelength selective switch can be added to provide additional capabilities such as switching wavelengths positioned in a flexible grid.

## Description

The present invention relates to optical data transmission and in particular to an upgradable optical routing apparatus for switching optical signals using two optical carrier transmission schemes.

### Introduction

In order to satisfy increasing demands for bandwidth, it is known to replace electrical core networks based on electrical signals over copper lines to optical core networks based on transmitting light pulses through optical fibres.

In optical data transmission, a signal to be transmitted is sent as a sequence of light pulses over an optic fibre to a photo detector which converts the optical signal into an electronic one for subsequent processing.

As with electrical data transmission, using a different fibre per transmission is expensive and therefore various techniques have been proposed to allow multiple signals to be transmitted over a single fibre. The two most common techniques are Time Division Multiplexing (TDM) and Wavelength Division Multiplexing (WDM).

In TDM, separate input signals are carried on a single fibre by allocating time transmission windows. The input signals are fed to a multiplexer which schedules use of the optical fibre so that each input signal is allowed to use the fibre in a specific time slot. At the receiver, synchronisation techniques are used to ensure that the different input signals are sent on to the appropriate destination.

In WDM, the fibre is shared by sending each input signal at the same time, but on a different carrier wavelength, for example a first signal could be transmitted using a carrier wavelength of 1539nm and another signal is transmitted using a carrier signal of 1560nm. The two signals can be multiplexed onto the same line and provided the carrier wavelengths are sufficiently different, the signals will not interfere with each other. At the end of the optical fibre, a receiver or router will demultiplex the incoming light signals into the individual signals and process them as required.

A grid of wavelengths is specified by the ITU so that compliant equipment from different manufacturers can operate together. The ITU has specified a number of Dense Wavelength Division Multiplexing grid sizes at 12.5Ghz, 25Ghz, 50Ghz and 100Ghz. 50Ghz is currently the most popular channel with and using the DP-QPSK modulation format, it is possible to fit a 100Gbit/s signal within a single channel in the 50Ghz grid.

However, research into optical transmission beyond 100Gbit/s has shown that higher spectral efficiency formats have to be used, or the spectral width of the signals must be increased to support 400Gbit/s or 1Tbit/s transmission. Utilising modulation formats with higher spectral efficiencies limits the distance the signal can propagate due to OSNR penalties, and increasing the spectral width means that the signal can no longer fit within the widely deployed 50Ghz ITU grid.

To overcome these problems, flexible grid or Flexgrid networks have been proposed. In this scheme, arbitrary sized wavelength blocks can be specified by the network owner and routed in Flexgrid Wavelength selective switches which can accommodate new bit rate services.

However, existing equipment for fixed grid transmission is incompatible with Flexgrid and therefore Flexgrid networks would require a new range of optical switching and transmission component. This would be very expensive to implement and currently it is not clear whether it is better to invest in new Flexgrid networks or continue with networks based on the ITU grid.

The present invention addresses the above issues.

In one aspect, an embodiment of the invention provides an apparatus for routing an optical signal in an optical network, the signal having a plurality of independent wavelength channels, the apparatus comprising: at least three interface ports; and optical pathways for connecting each interface port to at least two other interface ports, wherein each interface port comprises: means for splitting said optical signal, first optical switch receiving means for receiving a first optical switch, second optical switch receiving means for receiving a second optical switch, and means for combining optical signals switched by at least one of said first or second switch so as to generate an output optical signal.

In another aspect, an embodiment of the invention provides a method of reconfiguring an optical routing device having at least three interface ports, each interface port having a first optical switch and means for receiving a second optical switch, the method comprising: adding a second optical switch to at least one interface port of the optical routing device.

In a further aspect, an embodiment of the present invention provides an optical network for carrying optical data signals, comprising at least one apparatus according to claims 1 to 6.

Embodiments of the present invention will now be described with reference to the accompanying Figures in which:
Figure 1 shows an overview of a data network in which one part of the network transports data signals optically;
Figure 2 shows a more detailed view of the optical transmission network in which data signals are routed via optical routers;
Figure 3 shows the internal structure of an optical router illustrated in Figure 2;
Figure 4 shows the initial configuration the three port optical router containing fixed grid WSSs;
Figure 5 shows the configuration of the three port optical router when some Flexgrid WSSs have been installed; and
Figure 6 shows the configuration of the three port optical router when fully converted to Flexgrid;
and
Figure 7 shows the configuration of a four port optical router.

### Description

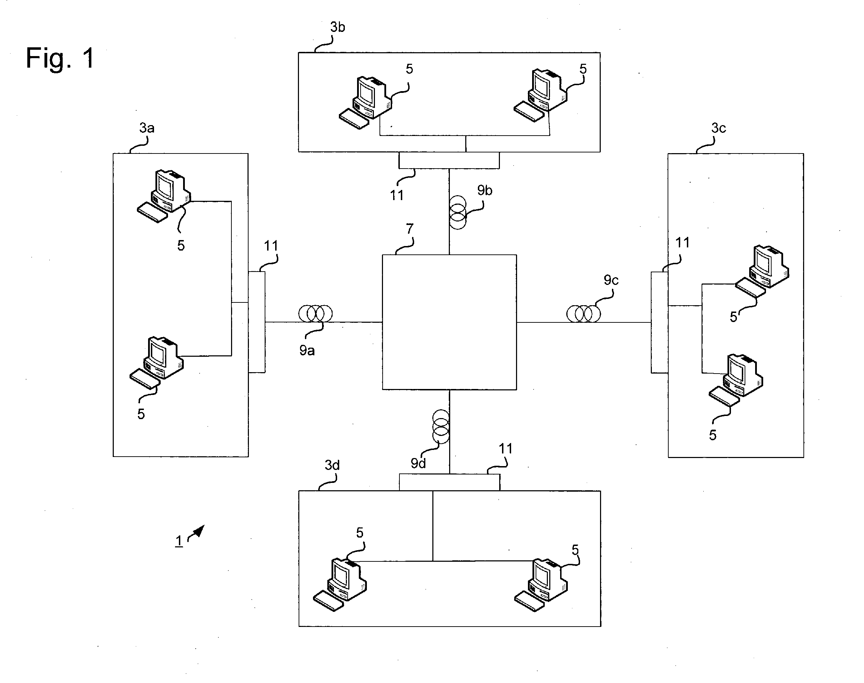

Figure 1 shows an overview of a data network system 1 in which one part of the network 1 is configured to transport data signals using an optical signal.

In Figure 1, four clusters of electrical signal data networks 3 are shown containing a number of network devices such as computers 5 which generate, send and receive data packets in the form of electrical data signals. The electrical networks 3 are connected to an optical backbone network 7 via bundles of optical fibres 9 so that the data can be routed between the different electrical networks optically. Each electrical network contains an optoelectronic converter 11 for converting electrical signals into optical signals and vice versa in a conventional manner.

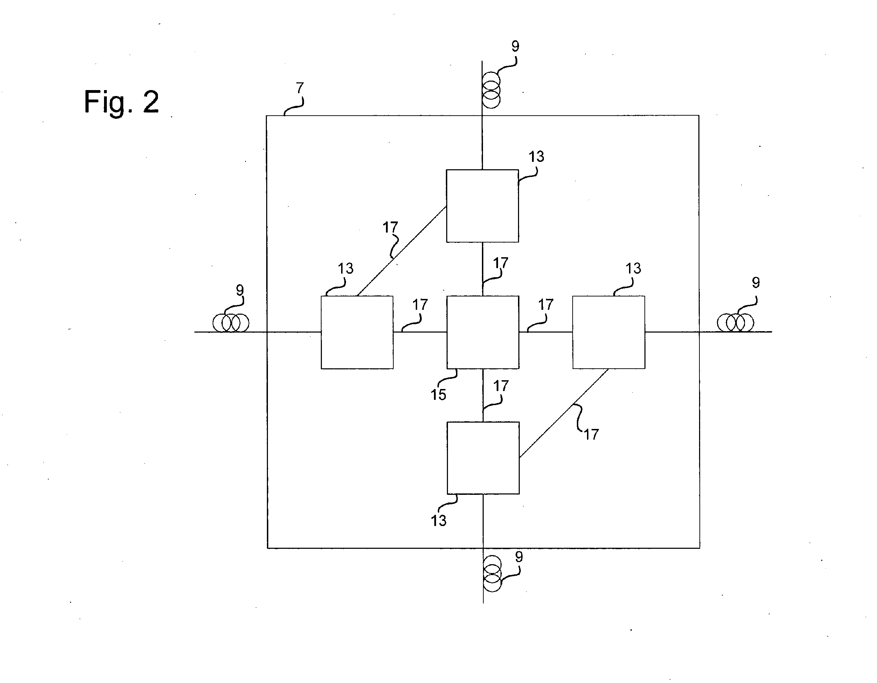

Figure 2 shows the main components of the optical backbone network 7. Due to the higher data capacity offered by optical fibres over copper cables, the optical network 7 has a much higher bandwidth and therefore is used to carry data between networks 3.

The optical network 7 is connected to the electrical data networks 3 via the bundles of optical fibres 9. In this embodiment, there are four bundles of optical fibres 9 carrying signals between the optical network 7 and four respective electrical data networks 3.

The optical network 7 contains a number of optical routers 13, 15. For ease of explanation, in this embodiment, there are some optical routers 13 having three input/output ports whilst other optical routers 15 have four input/output ports. Interconnect optical fibres 17 link the three port and four port optical routers 13, 15.

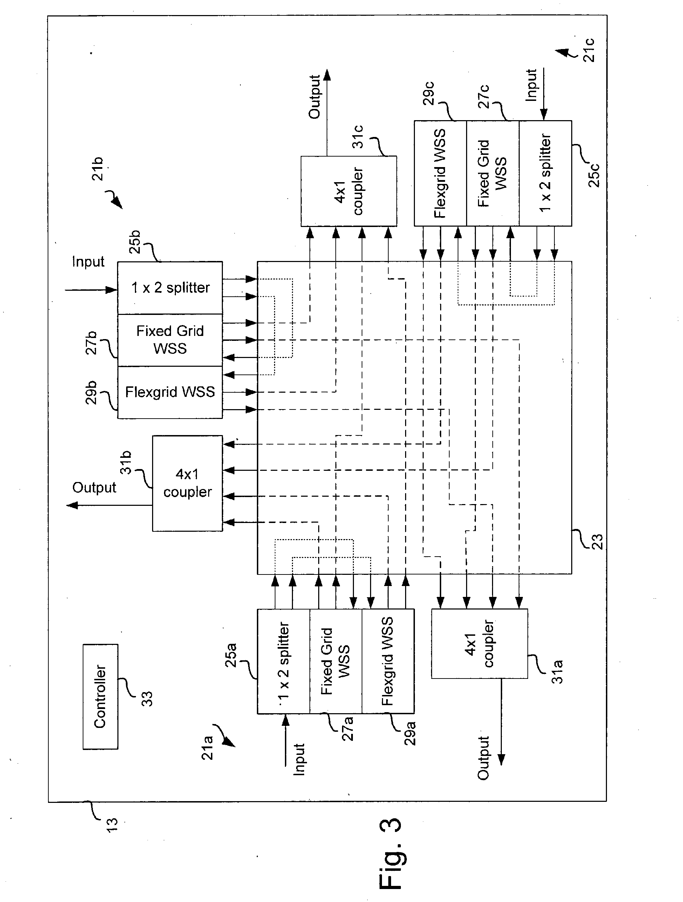

Figure 3 shows a more detailed view of a three port optical router 13. In this router 13, there are three input/output port 21 connected via an optical cross connect 23 and therefore optical signals entering via one port can leave the optical router 13 via one of two output ports. Input signals at port 21a can leave via port 21b or port 21c, input signals at port 21b can leave via port 21a or 21c and input signals at port 21c can leave via port 21a or 21b.

Optical signals entering the optical router 13 on any of the input ports do not need to be converted into electrical signals in order to be routed to a destination port. The routing is performed in an optical manner on the basis of wavelength of the incoming optical signal and this is set by the optoelectronic converter 11 located at the interface between the electrical data network and the optical fibre bundles 9. The optical routers 13 contain Wavelength Selective Switches 27, 29 in order to perform the optical routing on the basis of the wavelengths of the input light signal.

In order to route both fixed grid and Flexgrid scheme transmissions, the optical router 13 can contain both fixed grid WSS 27 and Flexgrid WSSs 29. A fixed grid WSS 27 operates to route optical signals having 50Ghz channel widths while a Flexgrid WSSs 29 routes optical signals having variable channel widths based on multiples of 12.5Ghz.

Each input/output port 21 contains an optical splitter 25 which splits the incoming signal so that both the fixed grid WSS 27 and Flexgrid WSS 29 receive the input signal and can then switch the component wavelength signals to the appropriate output port via the optical cross connect 23. Each input/output port 21 also has an optical coupler 31 which combines redirected signals before outputting them onto via an optical fibre bundle 9 to a different downstream optical router 13 or to the edge of the optical network. Since the splitter reduces the power of the input optical signal, an optical amplifier may be located between the optical routers in order to regenerate the optical signals. Each input/output port 21 provides space to fit a fixed grid WSS 27 and a Flexgrid WSS 29 regardless of whether it is actually fitted. Therefore each input/output port 21 will be in one of three configurations:
fixed grid WSS 27 only;
fixed grid WSS 27 and Flex Grid WSS 29; or
Flex Grid WSS 29 only.

This allows flexibility on the configuration of the optical router 13 and in particular allows the optical routers 13 to be upgraded as Flexgrid WSSs 29 fall in price.

The configuration parameters for the WSS devices 27, 29 are controlled by a central controller 33.

An example of the operation of the optical router 13 will now be described in the case that an input optical signal containing two signals, a 50Ghz fixed grid based signal A and a 12.5Ghz flex grid signal B, arrives at the optical splitter 25a of input/output port 21a. The optical splitter 25a splits the incoming signal into two identical but lower power signals onto the optical cross connect 23. The optical cross connect 23 is configured so that it provides light paths which connect the two outputs of the optical splitter 25a to the respective inputs of the fixed grid WSS 27a and the Flexgrid WSS 29a.

The fixed grid WSS 27a and the Flexgrid WSS 29a both receive the input signal via the splitter. The fixed grid WSS 27a is configured to block the Flexgrid signal B but direct the fixed grid signal A to an output port which could be port 21b or 21c. The fixed grid WSS therefore has two outputs which are connected via the optical cross connect 23 to optical coupler 31b of input/output port 21b and also optical coupler 31c of input/output port 21c. In the example, the fixed grid WSS is configured to direct signal A to the coupler 31b.

The Flexgrid WSS 29a is configured to block the fixed grid component signal A, but route Flexgrid signal B to either output of input/output port 21b or 21c. Flexgrid WSS 29a has two outputs onto the optical cross connect 23. One is directed to the optical coupler 31b and the other to the optical coupler 31c. In the example, the Flexgrid WSS is configured to direct signal B to the coupler 31b. Each of the three fixed grid WSSs 27 has two outputs and each of the Flexgrid WSSs 29 has two outputs so therefore each optical coupler 31 has four inputs to receive each of the possible WSS outputs. In the example, signal A and signal B are received by the optical coupler 31b. The signals are coupled onto the same output optical fibre bundle 9 towards the next optical router 13 or destination network.

In the above description, the optical router 13 has the ability to contain both fixed grid and Flexgrid WSSs 27, 29. However, Flexgrid technology is still fairly premature and therefore it is not expected that the optical routers 13 would be deployed in the configuration as shown in Figure 3.

The configuration of the optical routers 13 with groups of input/output ports 21 each having an optical splitter 25 and an optical coupler 31 allows the optical router 13 to be incrementally upgraded as Flexgrid WSSs mature.

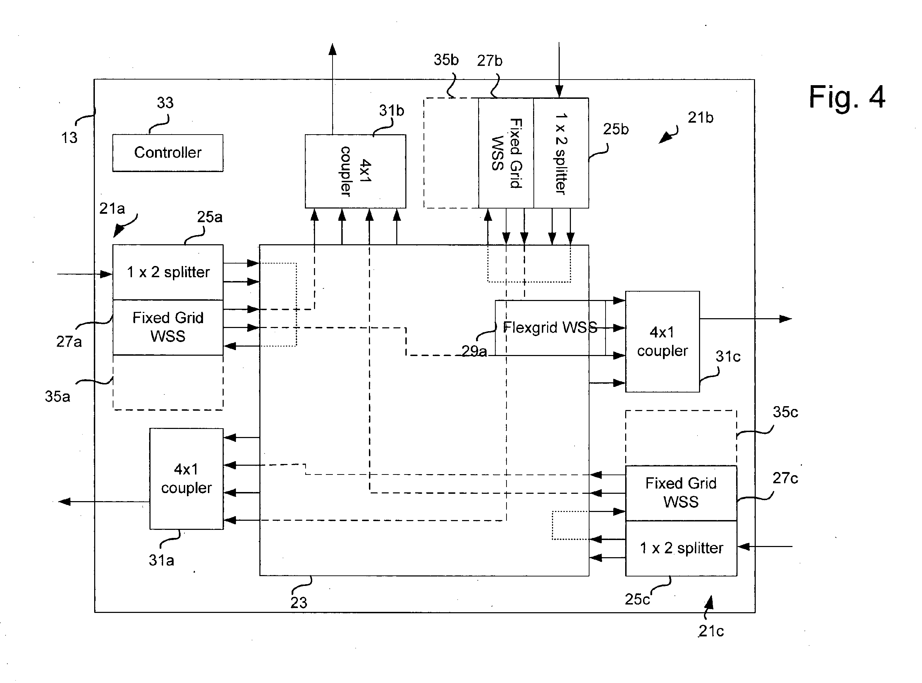

Figure 4 shows an initial configuration for the optical router 13 in which received optical signals conform to the fixed grid scheme and therefore the optical routers contain conventional fixed grid WSS devices 25 to optically route the optical signals. In this configuration, the controller 31 sets the splitter 25 to redirect all incoming light signals to the installed fixed grid WSS 27. Any fixed grid signals are routed to one of the couplers 29 of the other two ports 21. The ports contain a space 35 for the Flexgrid WSSs which will eventually be installed.

At a later point in time, when it is expected that Flexgrid has matured enough that Flexgrid WSS devices are available, the optoelectronic converters 11 are upgraded to support Flexgrid and therefore it is necessary to upgrade the core optical network 7 to support Flexgrid.

Installing an entire new Flexgrid enabled core network would be expensive and time intensive due to the equipment and installation costs. The configuration of the optical routers 13, however, allows the optical network to be upgraded incrementally with Flexgrid WSS 27 devices and the optical router 13 can switch to using Flexgrid without significant changes.

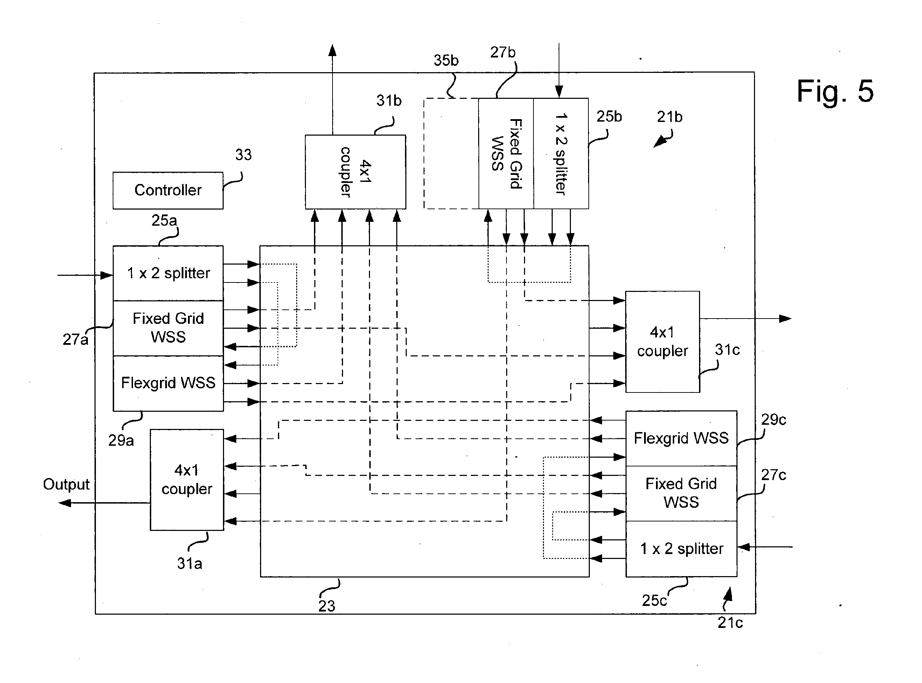

Figure 5 shows the optical router 13 with two of the input/output ports 21a and 21c upgraded with Flexgrid WSSs 29 while the third input/output port 21b has not been upgraded yet.

With the partial upgrade, cost savings can be made while improving the functionality of the optical router 13. In this partial upgrade configuration, the optical router 13 is able to carry both Flexgrid and fixed grid optical signals between ports 21a and 21c while fixed grid signals can be routed between ports 21a,21b and 21c. Therefore the optical router 13 has been improved without carrying out a full upgrade.

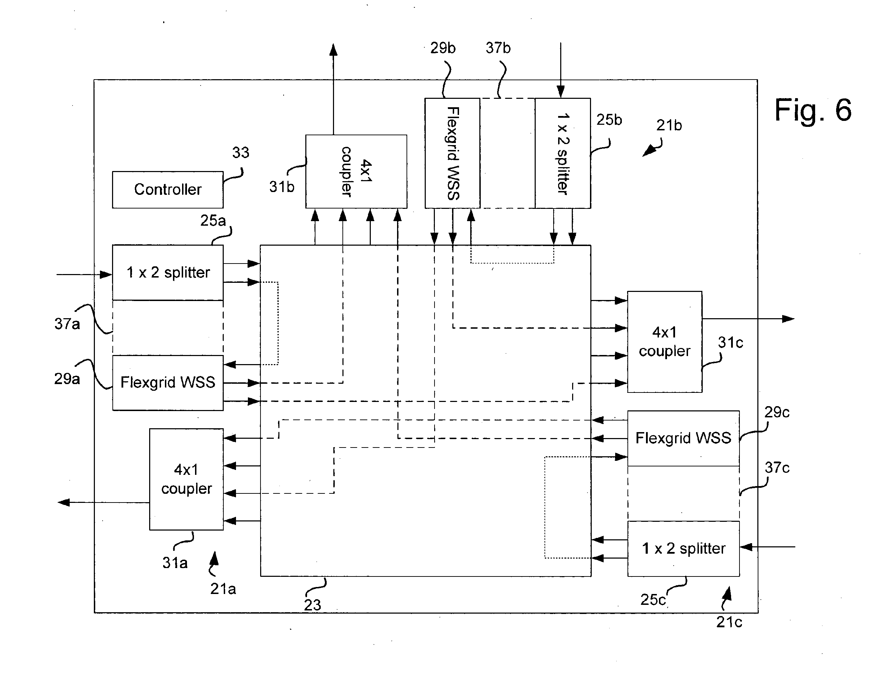

Figure 6 shows a later configuration in which the optical router 13 is switched entirely to Flexgrid operation. In this case the fixed grid WSSs 25 are not present in the optical router 13 and only Flexgrid WSSs 27 are used to route the optical signals based on wavelength. Each splitter 25 splits the incoming optical signals to two signals on the optical cross connect 23 but since only the Flexgrid WSSs 29 are connected, the signals which would previously have entered the fixed grid WSS are blocked and the component parts of input signals entering the FlexGrid WSS 29 are switched to an appropriate output port according to wavelength.

The space 37 within the optical router 13 left by the removal of the fixed grid WSS 25 can be reutilised. For example, if industry moves beyond the capabilities of the Flexgrid scheme, then new switches based on wavelength switching or other technology can be replaced into the optical router 13. An example could be switches which operate in the L frequency band (390Mhz to 1.55Ghz).

For ease of explanation, the operation of a three input/output port optical router 13 has been described. However typically the optical routers would have more ports and therefore the number of inputs that the optical couplers can potentially combine and the number of optical paths provided within the optical cross connect are higher.

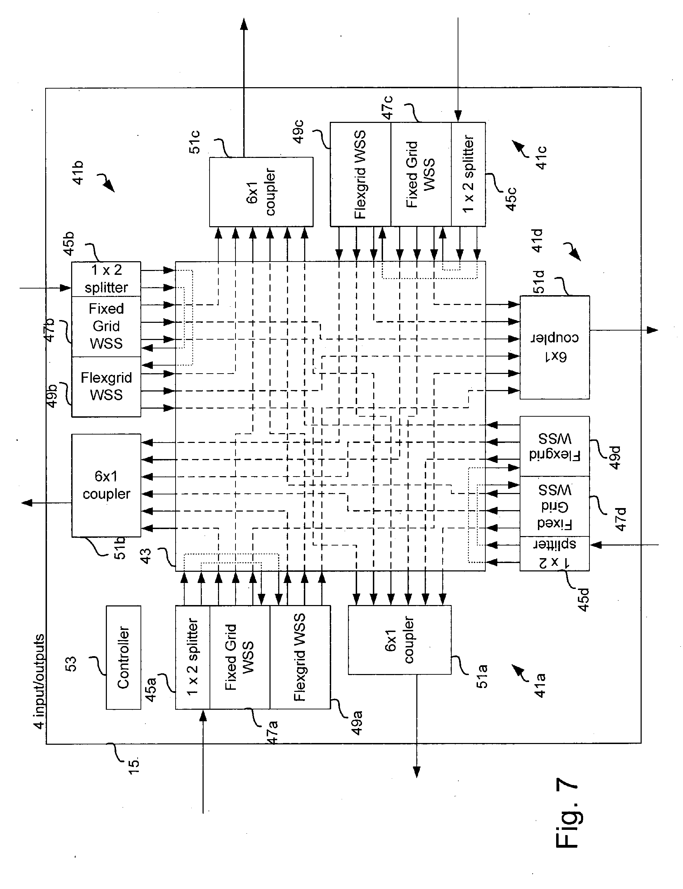

Figure 7 shows the structure of the four port optical router 15 when both fixed grid and Flexgrid WSSs are installed.

Optical router 15 contains four sets of input/output ports 41. Each input/output port 41 is connected to the other ports 41 via an optical cross connect 43 and each input/output port 41 has a two way splitter 43, a fixed grid WSS 45, a Flexgrid WSS 47 and instead of a four way coupler, now contains a six way coupler 49. A controller 51 within the optical router 15 sets the configuration of the components. The operation of the optical router 15 and the upgrade process from initial installation to removal of the fixed grid WSSs 47 is the same as for three port optical routers 13.

### Alternatives and modifications

In the embodiment, the optical routers contained an optical cross connect for routing optical signals between the input/output ports. Using optical cross connects is advantageous because it allows for fast remote provisioning of Flexgrid and allows the fixed grid WSS to be freed and reused elsewhere. However, in an alternative configuration the optical cross connect is replaced with permanent light paths between the inputs and outputs of the optical router. Such a configuration provides a cheaper optical router while still providing the ability to upgrade to Flexgrid WSSs.

In the embodiment, Flexgrid WSSs are added to the optical routers. However, if an alternative optical transmission scheme is established which makes Flexgrid redundant, the configuration of optical routers allow WSSs based on the new scheme to be used instead of Flexgrid.

In the embodiment, the fixed grid WSSs are removed from the optical routers, however, in an alternative, the fixed grid WSSs remain in the optical router and are used to route additional traffic arriving from the input ports. This provides extra capacity within the optical network.

In the embodiment, the output of an optical splitter is connected to the fixed grid and Flexgrid WSSs via the optical cross connect. In an alternative, the output of the optical splitter directly connects to the fixed grid or Flex grid WSS.

## Claims

1. Apparatus (13, 15) for routing an optical signal in an optical network (7), the signal having a plurality of independent wavelength channels, the apparatus (13, 15) comprising:
at least three interface ports(21); and
optical pathways (23) for connecting each interface port (21) to at least two other interface ports (21),
wherein
each interface port (21) comprises:
means (25) for splitting said optical signal,
first optical switch receiving means (37) for receiving a first optical switch (27),
second optical switch receiving means (35) for receiving a second optical switch (29), and
means (31) for combining optical signals switched by at least one of said first (27) or second switch (29) so as to generate an output optical signal.

2. Apparatus according to claim 1, further comprising a first optical switch (27).

3. Apparatus according to claim 2 wherein said first optical switch (27) is configured to switch optical signals containing independent wavelength channels which have been placed in accordance with a fixed channel spacing.

4. Apparatus according to any preceding claim, further comprising a second optical switch (29).

5. Apparatus according to claim 4 wherein said second optical switch (29) is configured to switch optical signals containing independent wavelength channels which have been placed in accordance with a variable channel spacing.

6. Apparatus according to any preceding claim, wherein the optical pathways are provided by an optical cross connect (23).

7. A method of reconfiguring an optical routing device (13, 15) having at least three interface ports (21), each interface port (21) having a first optical switch (27) and means for receiving a second optical switch (35), the method comprising:
adding a second optical switch (29) to at least one interface port (21) of the optical routing device (13, 15).

8. A method according to claim 7, further comprising, removing said first optical switch (27).

9. An optical network (7) for carrying optical data signals, comprising at least one apparatus (13, 15) according to claims 1. to 6.
